# EUROPÄISCHE PATENTSCHRIFT

(11) **EP 4 100 802 B1**
(45) Veröffentlichungstag und Bekanntmachung des Hinweises auf die Patenterteilung: **08.11.2023**
(21) Anmeldenummer: 21700280.7
(22) Anmeldetag: 08.01.2021
(51) Int. Cl.: G05B 19/042, G05B 15/02, E05F 15/60

(54) **VERFAHREN ZUR KONFIGURATION EINES WANDVERSCHLUSSSYSTEMS UND ENTSPRECHENDES WANDVERSCHLUSSSYSTEM**
CONFIGURATION OF A WALL CLOSURE SYSTEM AND RESPECTIVE WALL CLOSURE SYSTEM
CONFIGURATION D'UN SYSTÈME DE FERMETURE DE PAROI ET SYSTÈME DE FERMETURE DE PAROI CORRESPONDANT

(30) Priorität: 03.02.2020 DE 102020201281
(43) Veröffentlichungstag der Anmeldung: 14.12.2022
(73) Patentinhaber: GEZE GmbH, 71229 Leonberg (DE)
(72) Erfinder: WEBER, Christoph, 70176 Stuttgart (DE); GALLÉE, Jérémie, 70184 Stuttgart (DE)
(86) Internationale Anmeldenummer: PCT/EP2021/050302
(87) Internationale Veröffentlichungsnummer: WO 2021/156013

(56) Entgegenhaltungen:
- WO-A1-2019/162363
- DE-A1-102004 010 919
- DE-A1-102007 039 425
- DE-U1-202013 100 498

## Beschreibung

Die vorliegende Erfindung betrifft Verfahren zum Konfigurieren eines Wandverschlusssystems und ein Wandverschlusssystem.

Wandverschlüsse dienen dazu, Öffnungen in Gebäudewänden selektiv zu öffnen oder zu schließen, und sind in der Regel als Türen, Fenster oder dergleichen ausgebildet. Wandverschlusssysteme ermöglichen es, Funktionen derartiger Wandverschlüsse, etwa ein Öffnen, Schließen oder Verriegeln, automatisiert auszuführen. Insbesondere können Wandverschlusssysteme eine Brandschutzfunktion, bei der der Wandverschluss beispielsweise im Brandfall automatisch geschlossen wird, eine Fluchttürfunktion, bei der der Wandverschluss im Gefahrenfall entriegelt und/oder automatisch geöffnet wird, oder eine Rauchabzugsfunktion, bei der als Rauchabzüge fungierende Öffnungen automatisiert geöffnet werden, ausführen. Zum automatisierten Ausführen der genannten Funktionen umfassen die Wandverschlusssysteme in der Regel mehrere Funktionsgeräte, die über Kommunikationsleitungen miteinander verbunden sind. Die Funktionsgeräte können als Aktoreinheiten zur Änderung eines Zustands des Wandverschlusses, etwa zum Bewegen oder Verriegeln des Wandverschlusses, oder als Sensoreinheiten zum Erfassen von Zuständen des Wandverschlusses ausgebildet sein. Die Funktionsgeräte können auch als Steuer- oder Logikeinheiten ausgebildet sein, welche Eingangsdaten der Sensoreinheiten logisch verknüpfen, um Ausgangsdaten zur Ansteuerung der Aktoreinheiten zu erzeugen. Die Aktoreinheiten können insbesondere als Antriebe des Wandverschlusses und die Sensoreinheiten als Schalter oder Bewegungssensoren ausgebildet sein. Die Eingangs- und Ausgangsdaten der Sensoreinheiten und Aktoreinheiten werden über die Kommunikationsleitungen zwischen den Funktionsgeräten übertragen.

Bei der Installation und Inbetriebnahme derartiger Wandverschlusssysteme müssen diese dahingehend konfiguriert werden, dass eine fehlerfreie Steuerung des Wandverschlusses ermöglicht wird. Im Rahmen der Konfiguration wird unter anderem festgelegt, auf welche Weise Daten über die Datenleitungen zwischen den Funktionsgeräten übertragen werden. Dies betrifft insbesondere eine Auswahl der zu übertragenden Daten und der an der Datenübertragung beteiligten Funktionsgeräte, die Art und Weise, wie die Daten der Funktionsgeräte logisch verknüpft werden, und welche Eingangsdaten eingelesen bzw. welche Ausgangsdaten ausgegeben werden. Beispielsweise kann in der Konfiguration festgelegt werden, dass Eingangsdaten von einem Schalter des Wandverschlusssystems eingelesen werden, über die Datenleitungen an eine Steuereinheit übertragen werden und bei Betätigung des Schalters Ausgangsdaten zur Ansteuerung eines Antriebs des Wandverschlusses erzeugt werden, um den Wandverschluss zu öffnen oder zu schließen.

Das Konfigurieren von Wandverschlusssystemen wird in der Regel mittels spezieller Konfigurierwerkzeuge vorgenommen, mit denen Konfigurationsdaten in den einzelnen Funktionsgeräten hinterlegt werden. Hierzu stellen die Konfigurierwerkzeuge üblicherweise eine mit den Funktionsgeräten verbindbare Benutzerschnittstelle bereit, etwa ein mit den Funktionsgeräten verbindbares Programmiergerät. Die Bedienung derartiger Konfigurierwerkzeuge ist in der Regel verhältnismäßig aufwendig und erfordert tiefergehende Fachkenntnisse über Aufbau und Funktionsweise des Wandverschlusssystems.

Die Druckschrift DE 20 2013 100 498 U1 beschreibt die Initialisierung eines Antriebssystems für bewegliche Flügel von Fenstern, Türen, Klappen oder dergleichen, bei dem mehrere Antriebseinheiten mit einer programmierbaren Kontrolleinrichtung über eine Steuerleitung verbunden sind.

Die Druckschrift DE 10 2004 010919 A1 beschreibt ein Torantriebssystem, bei dem unter anderem Antriebe und Bedienteile, wie Funkempfänger oder Lichtschranken, über einen Datenbus nach dem Master-Slave-Verfahren miteinander kommunizieren.

Die Druckschrift DE 10 2007 039 425 A1 beschreibt eine Steuerung für Fertigungsprozesse, bei der mehrere Steuerknoten und ein Netzwerkkonfigurator an ein Kommunikationsnetz angeschlossen sind.

Es ist Aufgabe der Erfindung, ein Verfahren zum Konfigurieren eines Wandverschlusssystems, ein Wandverschlusssystem und ein Funktionsgerät für ein Wandverschlusssystem derart anzugeben, dass ein besonders einfaches Konfigurieren des Wandverschlusssystems ermöglicht wird.

Diese Aufgabe wird durch ein Verfahren zum Konfigurieren eines Wandverschlusssystems und ein Wandverschlusssystem gemäß den unabhängigen Ansprüchen gelöst. Weiterbildungen sind jeweils in den abhängigen Ansprüchen angegeben.

Es wird ein Verfahren angegeben zum Konfigurieren eines Wandverschlusssystems für einen Wandverschluss, insbesondere für eine Tür oder ein Fenster, mit den Merkmalen des Anspruchs 1.

Indem die den einzelnen Aufbauvarianten zugeordneten Konfigurationen des Wandverschlusssystems in dem mindestens einen Funktionsgerät hinterlegt sind und das betreffende Funktionsgerät die dem ermittelten Aufbau des Wandverschlusssystems zugeordnete Konfiguration auswählt, insbesondere eigenständig auswählt, kann das Wandverschlusssystem besonders einfach und automatisiert konfiguriert werden. Es ist insbesondere nicht mehr notwendig, die Funktionsgeräte nach Anschluss an das Bussystem zunächst über eine Benutzerschnittstelle zu konfigurieren und beispielsweise Datenverbindungen zwischen den einzelnen Funktionsgeräten oder logische Verknüpfungen der Funktionsdaten zu definieren, ehe ein Betrieb des Wandverschlusssystems möglich ist.

Der Aufbau und die verschiedenen Aufbauvarianten des Wandverschlusssystems werden insbesondere durch die an das Bussystem angeschlossenen Funktionsgeräte sowie die Gerätetypen der einzelnen Funktionsgeräte festgelegt. Zusätzlich können der Aufbau und die verschiedenen Aufbauvarianten des Wandverschlusssystems durch den einzelnen Funktionsgeräten zugewiesene Funktionen, beispielsweise einer Zuordnung zu einem Gangflügel oder einem Standflügel des Wandverschlusses, festgelegt sein.

Im Rahmen der Erfindung wurde erkannt, dass Wandverschlusssysteme in der Regel in Standardkonfigurationen, welche einer begrenzten Zahl unterschiedlicher Aufbauvarianten entsprechen, installiert werden und es insofern möglich ist, ein automatisches Konfigurieren der Wandverschlusssysteme anhand der möglichen Aufbauvarianten zu realisieren. Ferner wurde erkannt, dass durch ein automatisiertes Konfigurieren des Wandverschlusssystems auf einfache Art und Weise eine normgerechte Konfiguration sichergestellt werden kann, etwa bei sicherheitsrelevanten Wandverschlusssystemen wie Fluchttürsystemen oder Brandschutzsystemen. Grundidee ist es dabei jeweils, dass der Anwendungsfall des Wandverschlusssystems anhand der an das Bussystem angeschlossenen Funktionsgeräte erkannt wird und anschließend eine für den Anwendungsfall vorgesehene und in mindestens einem Funktionsgerät hinterlegte Konfiguration vorgenommen wird.

Der Wandverschluss kann als eine Tür, ein Tor, ein Fenster oder dergleichen ausgebildet sein. Der Wandverschluss kann einflügelig oder mehrflügelig, insbesondere zweiflügelig ausgebildet sein. Der Wandverschluss kann an einer einen Raum, insbesondere einen geschlossenen Raum, begrenzenden Wand angeordnet sein. Der Wandverschluss kann beispielsweise in einer Außenwand oder einer Innenwand angeordnet sein, etwa an einer Wand eines Gebäudes, eines Fahrzeugs, Schiffs, Flugzeugs oder dergleichen.

Das Wandverschlusssystem kann als ein Antriebssystem des Wandverschlusses dazu dienen, den Wandverschluss automatisiert zu bewegen, beispielsweise zu öffnen oder zu schließen. Alternativ oder zusätzlich kann das Wandverschlusssystem als ein Zutrittskontrollsystem dazu ausgebildet sein, eine Berechtigung zum Öffnen oder Schließen des Wandverschlusses zu überprüfen undloder den Wandverschluss automatisiert zu verriegeln oder zu entriegeln. Das Wandverschlusssystem kann alternativ oder zusätzlich auch als ein Sicherheitssystem zum Ausführen sicherheitskritischer Funktionen des Wandverschlusses, beispielsweise als ein Brandschutzsystem, Rettungsweg- oder Fluchtwegsystem, Rauchabzugssystem o. ä. ausgebildet sein.

Die Funktionsgeräte können unter anderem als Ausgangseinheiten zur Ansteuerung von Aktoren des Wandverschlusses, beispielsweise zur Ansteuerung von Türantrieben, Motorschlössern oder Offenhaltemagneten undloder als Eingangseinheiten zum Einlesen von Sensorsignalen aus Sensoren des Wandverschlusssystems, beispielsweise aus Sensorleisten, aus Schaltern, insbesondere Tastern oder Notaufschaltern, aus Identifikationsgeräten wie Schlüsselschaltern oder Kartenlesern oder aus Feuer- oder Rauchmeldern ausgebildet sein. Alternativ oder zusätzlich können die Funktionsgeräte auch als Logikeinheiten zur Verarbeitung der eingelesenen Sensorsignale und Ausgabe von Aktorsignalen an die Aktoren, beispielsweise als Türzentralen oder Fluchttürsteuerungen, ausgebildet sein.

Die über das Bussystem übertragenen Funktionsdaten können unter anderem die eingelesenen Sensorsignale oder die auszugebenden Aktorsignale repräsentieren. Die hinterlegten Konfigurationen können jeweils Datenverbindungen zwischen den einzelnen Funktionsgeräten umfassen, welche unter anderem die auszutauschenden Funktionsdaten, die Funktionsgeräte, zwischen denen die Funktionsdaten ausgetauscht werden, undloder Zeitpunkte, zu denen die Funktionsdaten ausgetauscht werden, festlegen.

Die hinterlegten Konfigurationen können jeweils Steuerprogramme mit Logikbefehle umfassen, welche in den einzelnen Funktionsgeräten hinterlegt werden und festlegen, auf welche Weise die Funktionsdaten logisch miteinander verknüpft werden. Die Konfigurationen können auch jeweils vorgegebene Anfangswerte für Konfigurationsparameter des Wandverschlusssystems umfassen. Die Konfigurationsparameter können beispielsweise eine Öffnungsgeschwindigkeit, eine Offenhaltezeit, eine Schließgeschwindigkeit oder ähnliche, die automatisierten Systemfunktionen des Wandverschlusses beschreibende Parameter sein. Die Konfigurationsparameter können insbesondere durch die hinterlegten Steuerprogramme ausgewertet werden.

Je nach Konfiguration des Wandverschlusssystems können die Funktionsgeräte zugleich als Eingangseinheiten und/oder Ausgangseinheiten undloder Logikeinheiten ausgebildet sein. Insbesondere kann grundsätzlich jedes Funktionsgerät die Fähigkeit aufweisen, eine logische Verknüpfung der über das Bussystem übertragenen Funktionsdaten vorzunehmen. Die ausgewählte Konfiguration kann dann festlegen, in welchem der Funktionsgeräte die logische Verknüpfung der übertragenen Funktionsdaten tatsächlich stattfindet. So kann beispielsweise bei einer Konfiguration mit einer Türzentrale oder einem zentralen Steuergerät eine logische Verknüpfung von Funktionsdaten zur Ansteuerung eines Aktors, etwa eines Türantriebs, in dem zentralen Steuergerät stattfinden. Bei einer alternativen Konfiguration ohne zentrales Steuergerät kann die Verknüpfung der Funktionsdaten zur Ansteuerung des Aktors dann direkt in der Ausgangseinheit, an die der Aktor angeschlossen ist, erfolgen, beispielsweise in dem den Aktor umfassenden Türantrieb.

Die hinterlegten Konfigurationen können insbesondere festlegen, in welchem der an das Bussystem angeschlossenen Funktionsgeräte eine geräteübergreifende Systemfunktion gesteuert wird. Die geräteübergreifende Systemfunktion kann insbesondere ein Ansteuern mehrerer Funktionsgeräte umfassen. Beispielsweise kann die geräteübergreifende Systemfunktion ein zeitlich koordiniertes Ansteuern mehrerer Funktionsgeräte, beispielsweise ein zeitlich koordiniertes Ansteuern mehrerer Ausgangseinheiten, umfassen.

Die geräteübergreifende Systemfunktion kann beispielsweise ein automatisiertes Entriegeln und Öffnen des Wandverschlusses, etwa einer Fluchttür, umfassen. Dabei können mehrere Funktionsgeräte derart angesteuert werden, dass zunächst eine mit einem Antrieb verbundene Antriebseinheit einen Flügel des Wandverschlusses gegen die Widerstandskraft einer Dichtung des Wandverschlusses zurückzieht, anschließend eine mit einem Schloss des Wandverschlusses verbundene Motorschlosseinheit den Wandverschluss entriegelt und danach die mit dem Antrieb verbundene Antriebseinheit den Flügel des Wandverschlusses in die Offenstellung öffnet. Handelt es sich bei dem Wandverschluss um einen zweiflügeligen Wandverschluss, so können alternativ oder zusätzlich eine mit einem Gangflügel des Wandverschlusses verbundene Antriebseinheit und eine mit einem Standflügel des Wandverschlusses verbundene weitere Antriebseinheit im Rahmen einer geräteübergreifenden Systemfunktion derart zeitlich koordiniert angesteuert werden, dass zunächst der Gangflügel und erst anschließend der Standflügel in Bewegung gesetzt wird.

Gemäß den hinterlegten Konfigurationen kann die geräteübergreifende Systemfunktion in jeder Konfiguration jeweils durch das höchstwertige an das Bussystem angeschlossene Funktionsgerät gesteuert werden. Den einzelnen Funktionsgeräten kann dabei jeweils eine Wertigkeit zugeordnet sein, welche beispielsweise einer Rechenkapazität der einzelnen Funktionsgeräte entspricht. Je höher die Rechenkapazität ist, desto höher kann auch die Wertigkeit des jeweiligen Funktionsgeräts sein. Insbesondere kann eine Türzentrale oder ein Zentralgerät eine höhere Wertigkeit aufweisen als eine Antriebseinheit und die Antriebseinheit kann eine höhere Wertigkeit aufweisen als eine Sensoreinheit. So kann die geräteübergreifende Systemfunktion in einer ersten Konfiguration, welche das Zentralgerät oder die Türzentrale umfasst, in dem Zentralgerät oder der Türzentrale gesteuert werden und in einer zweiten Konfiguration, welche lediglich die Antriebseinheit, nicht jedoch die Türzentrale bzw. das Zentralgerät umfasst, in der Antriebseinheit.

Bei dem Steuern der geräteübergreifende Systemfunktion kann zumindest ein Teil der über das Bussystem übertragenen Funktionsdaten logisch verknüpft werden. Beispielsweise kann ein erster Teil der übertragenen Funktionsdaten in dem die geräteübergreifende Systemfunktion ausführenden Funktionsgerät logisch verknüpft werden, während ein zweiter Teil der übertragenen Funktionsdaten in einem anderen Funktionsgerät und/oder weitere Teile der übertragenen Funktionsdaten in weiteren Funktionsgeräten logisch verknüpft werden. Funktionsdaten können in dem die geräteübergreifende Systemfunktion ausführenden Funktionsgerät auch nur zur Realisierung der Systemfunktion, etwa einer Fluchttürfunktion oder einer Brandschutzfunktion, logisch verknüpft werden und zur Realisierung zumindest einer weiteren Systemfunktion, beispielsweise einer Türöffnerfunktion, dezentral in einem oder mehreren anderen Funktionsgeräten, beispielsweise direkt in einer oder mehreren der Antriebseinheiten.

Eine andere geräteübergreifende Systemfunktion kann beispielsweise ein Sammeln und/oder Zusammenführen von über das Bussystem übertragenen Statusdaten, beispielsweise Systemfehlerdaten, Wartungsparameterdaten, wie etwa Öffnungszykluszahlen, und/oder Systemkonfigurationsparameterdaten umfassen. Die gesammelten und/oder zusammengeführten Statusdaten können anschließend in dem die geräteübergreifende Systemfunktion ausführenden Funktionsgerät gespeichert werden und/oder über eine Datenverbindung, die an das die geräteübergreifende Systemfunktion ausführende Funktionsgerät oder an ein weiteres Funktionsgerät angeschlossen ist, übermittelt werden.

Die Funktionsgeräte bilden Busteilnehmer des Bussystems und kommunizieren über das Bussystem gemäß einem vorgegebenen Busprotokoll. Das Bussystem kann insbesondere als ein Feldbus, beispielsweise als ein echtzeitfähiger Feldbus, ausgebildet sein. Die Datenübertragung über das Bussystem kann insbesondere nach dem CAN-Bus Protokoll, dem KNX Protokoll, dem BACnet Protokoll, dem Lon Talk Protokoll, dem ZigBee Protokoll, dem LIN-Protokoll oder dem Profibus Protokoll erfolgen.

Das Wandverschlusssystem kann als eine Wandverschlussanlage, insbesondere als eine Türanlage, ausgebildet sein, wobei eine derartige Wandverschlussanlage alle Funktionsgeräte umfasst, die in unmittelbarer räumlicher Nähe eines einzelnen Wandverschlusses angeordnet sind und/oder Funktionen dieses einzelnen Wandverschlusses ausführen. Die Funktionsgeräte sind dabei in einem um den Wandverschluss angeordneten Umfeldbereich angeordnet und/oder können lediglich aus diesem Umfeldbereich heraus aktiviert werden. Die Wandverschlussanlage umfasst beispielsweise alle Sensoren, die vom Umfeldbereich des Wandverschlusses aus aktiviert werden können, und alle Aktoren, die in dem Umfeldbereich des Wandverschlusses angeordnet sind und/oder den Wandverschluss antreiben. Eine Anbindung der Wandverschlussanlage an weitere Wandverschlussanlagen oder an übergeordnete Steuersysteme, beispielsweise Gebäudeleitsysteme, kann über eine zusätzliche Datenverbindung erfolgen, die insbesondere getrennt von dem Bussystem ausgebildet sein kann. An die zusätzliche Datenverbindung kann lediglich eines der Funktionsgeräte der Wandverschlussanlage angebunden sein, das die übrigen Funktionsgeräte dann mittelbar mit der zusätzlichen Datenverbindung verbindet. Die zusätzliche Datenverbindung kann auf einem Datenübertragungsprotokoll basieren, welches sich von einem auf dem Bussystem verwendeten Datenübertragungsprotokoll unterscheidet oder dem auf dem Bussystem verwendeten Datenübertragungsprotokoll entspricht.

Das Verfahren kann für alle an das Bussystem angeschlossenen Funktionsgeräte durchgeführt werden. Es kann aber auch nur für einen Teil der an das Bussystem angeschlossenen Funktionsgeräte durchgeführt werden, wobei die übrigen Funktionsgeräte mit beispielsweise über ein Konfiguriergerät voreingestellten Konfigurationen betrieben werden. Insofern bezieht sich die vorliegende Beschreibung des angegebenen Verfahrens zum Konfigurieren des Wandverschlusssystems lediglich auf diejenigen von gegebenenfalls mehreren Funktionsgeräten eines Bussystems, welche mit dem angegebenen Verfahren konfiguriert werden.

Die unterschiedlichen Aufbauvarianten des Wandverschlusssystems sind in mehreren oder in allen mittels des Verfahrens konfigurierten Funktionsgeräten hinterlegt, und die betreffenden Funktionsgeräte führen das Verfahren jeweils eigenständig und unabhängig voneinandei aus.

Dabei ermitteln die betreffenden Funktionsgeräte den Aufbau des Wandverschlusssystems jeweils eigenständig und wählen die durch den jeweils ermittelten Aufbau realisierte Aufbauvariante des Wandverschlusssystems aus der Mehrzahl vorgegebener Aufbauvarianten des Wandverschlusssystems eigenständig aus. Außerdem konfigurieren sich die betreffenden Funktionsgeräte anschließend jeweils eigenständig gemäß der ausgewählten Konfiguration.

Anhand der Initialisierungsdaten können insbesondere Geräteparameter wie eine eindeutige Kennung undloder Busadresse, ein Gerätetyp undloder eine zugewiesene Funktion der einzelnen an das Bussystem angeschlossenen Funktionsgeräte ermittelt werden. Die Initialisierungsdaten eines Teilnehmers können insbesondere dessen eindeutige Kennung und/oder dessen Busadresse und/oder dessen Gerätetyp und/oder dessen zugewiesene Funktion bzw. Funktionsbezeichnung enthalten undloder bezeichnen. Beispielsweise können die durch die einzelnen Funktionsgeräte gesendeten Initialisierungsdaten die Kennung, den Gerätetyp und die zugewiesene Funktion des jeweiligen Funktionsgeräts enthalten. Die Initialisierungsdaten eines der Funktionsgeräte können in einer einzelnen Nachricht oder aufgeteilt auf mehrere Nachrichten über das Bussystem übertragen werden. Jeder möglichen Aufbauvariante des Wandverschlusssystems kann ein eindeutiger Geräteparametersatz zugeordnet sein und die dem Aufbau zugeordnete Konfiguration des Wandverschlusssystems kann durch Vergleich der aus den Initialisierungsdaten ermittelten Geräteparameter mit den hinterlegten Geräteparametersätzen ermittelt werden.

Bei einer Weiterbildung des Verfahrens unterscheiden sich die Aufbauvarianten des Wandverschlusssystems durch die an das Bussystem angeschlossenen Funktionsgeräte und/oder durch die den Funktionsgeräten zugewiesenen Gerätefunktionen. Umfasst das Wandverschlusssystem beispielsweise zwei Ausgangseinheiten zur Ansteuerung von jeweils einem Antrieb des Wandverschlusses und eine Sensorleiste zur Erfassung von Personen, die sich dem Wandverschluss nähern, so kann einem derartigen Aufbau des Wandverschlusssystems beispielsweise eine Konfiguration als automatisches Türöffnungssystem zugeordnet sein. Umfasst der Aufbau zusätzlich noch eine zentrale Türsteuerung mit Notöffnungsfunktion, so kann diesem Aufbau des Wandverschlusssystems eine Konfiguration als Fluchttürsystem zugeordnet sein. Die dem Aufbau zugeordnete Konfiguration des Wandverschlusssystems kann dann in Abhängigkeit davon ausgewählt und bestimmt werden, ob die zentrale Türsteuerung an das Bussystem angeschlossen ist oder nicht.

Die Aufbauvarianten des Wandverschlusssystems können sich auch bei identischer Art und Anzahl an das Bussystem angeschlossener Funktionsgeräte alleine anhand der den Funktionsgeräten zugewiesenen Funktionen unterscheiden. Die Gerätefunktionen können beispielsweise festlegen, welcher Komponente des Wandverschlusses die einzelnen Funktionsgeräte zugeordnet sind. Bei einem Funktionsgerät, welches einen Antrieb oder eine motorische Verriegelungseinheit ansteuert, kann die dem Funktionsgerät zugewiesene Gerätefunktion beispielsweise festlegen, ob das Funktionsgerät einem Gangflügel oder einem Standflügel des Wandverschlusses zugeordnet ist. Die Funktionen können dem Funktionsgerät zu Beginn des angegebenen Verfahrens zugewiesen werden, insbesondere automatisiert. Insofern kann das Verfahren als zusätzliche Schritte ein Austauschen von weiteren Initialisierungsdaten zwischen den Funktionsgeräten über das Bussystem und ein Ermitteln der den Funktionsgeräten zugewiesenen Funktionen aus den weiteren Initialisierungsdaten umfassen. Die weiteren Initialisierungsdaten können insbesondere angeben, welcher Komponente des Wandverschlusses das die Initialisierungsdaten sendende Funktionsgerät jeweils zugeordnet ist.

Bei einer Weiterbildung des Verfahrens werden die Initialisierungsdaten mittels von den einzelnen Funktionsgeräten gesendeter Rundspruchnachrichten, die von den jeweiligen übrigen Funktionsgeräten ausgewertet werden, übertragen. Dies ermöglicht es, die Initialisierungsdaten ohne Kenntnis des Aufbaus des Wandverschlusssystems, insbesondere ohne Kenntnis von Empfängeradressen der einzelnen Funktionsgeräten an alle an das Bussystem angeschlossenen Funktionsgerät zu übermitteln. Die Rundspruchnachrichten können auch als sogenannte Broadcast Nachrichten bezeichnet werden.

Bei einer Weiterbildung des Verfahrens umfasst das Konfigurieren ein Festlegen von logischen Datenverbindungen, anhand derer während des Betriebs des Wandverschlusssystems Funktionsdaten zwischen den Funktionsgeräten ausgetauscht werden. Eine derartige logische Datenverbindung verknüpft jeweils mindestens zwei Funktionsgeräte miteinander und legt fest, welche Funktionsdaten während des Betriebs des Wandverschlusssystems zwischen den verknüpften Funktionsgeräten ausgetauscht werden und welches Funktionsgerät bzw. welche Funktionsgeräte jeweils als Sender und welches Funktionsgerät bzw. welche Funktionsgeräte jeweils als Empfänger der einzelnen Funktionsdaten fungieren. Insbesondere kann eine logische Datenverbindung festlegen, welche Funktionsgeräte als Empfänger von einzelnen, vordefinierten Funktionsdaten fungieren.

Bei einer Weiterbildung des Verfahrens umfasst das Konfigurieren ein Festlegen von Einlesebefehlen für Eingangseinheiten bildende Funktionsgeräte, um ein Einlesen von Eingangssignalen zu steuern, und/oder ein Festlegen von Ausgabebefehlen für Ausgangseinheiten bildende Funktionsgeräte, um ein Ausgeben von Ausgangssignalen zu steuern. Die Einlesebefehle legen fest, welche Sensorsignale von den einzelnen Eingangseinheiten jeweils eingelesen werden und welchen über das Bussystem übertragenen Funktionsdaten die einzelnen Sensorsignale zugeordnet sind bzw. welche Funktionsdaten aus den Sensorsignalen gewonnene und die Sensorsignale repräsentierende Sensordaten enthalten. Analog legen die Ausgabebefehle fest, welche Ausgangssignale die einzelnen Ausgangseinheiten jeweils ausgeben und aus welchen Funktionsdaten die Ausgangssignale abgeleitet werden bzw. welche Funktionsdaten die Ausgangssignale festlegende Ausgangsdaten enthalten. Insgesamt können durch die ausgewählte Konfiguration unter anderem die Funktionsdaten, die den einzelnen Funktionsgeräten zur Verfügung gestellt werden, festgelegt werden.

Bei einer Weiterbildung des Verfahrens umfasst das Konfigurieren ein Festlegen von Logikbefehlen zur logischen Verknüpfung der Funktionsdaten in Logikeinheiten bildenden Funktionsgeräten. Die Logikbefehle legen die Reaktion des Wandverschlusssystems bzw. der einzelnen Funktionsgeräte auf Zustandsänderungen, beispielsweise auf die Betätigung eines Sensors, etwa eines Schalters, fest. Die Logikbefehle können insbesondere als sogenannte Applikationen in den einzelnen Funktionsgeräten hinterlegt sein. Die Logikbefehle sind jeweils Bestandteil von Steuerprogrammen der Funktionsgeräte. Neben den Funktionsdaten können die Logikbefehle auch von in den Funktionsgeräten hinterlegten Konfigurationsparametern abhängen. Die logischen Verknüpfungen können insbesondere logische Operatoren, etwa UND, ODER oder NICHT, umfassen. Ein Logikbefehl kann beispielsweise festlegen, dass nach Betätigung eines Sensors eines ersten Funktionsgeräts ein Aktor eines zweiten Funktionsgeräts angesteuert wird. Ein weiterer Logikbefehl kann beispielsweise festlegen, dass der Aktor des zweiten Funktionsgeräts nur angesteuert wird, wenn der Sensor des ersten Funktionsgeräts und der Sensor eines weiteren Funktionsgeräts betätigt werden.

Eine Weiterbildung des Verfahrens umfasst:
- Einlesen mindestens eines zusätzlichen Konfigurationsparameters über eine Benutzerschnittstelle des Wandverschlusssystems,
- Anpassen der ausgewählten Konfiguration anhand des eingelesenen Konfigurationsparameters.

Die in dem mindestens einen Funktionsgerät hinterlegten Konfigurationen können jeweils Grundkonfigurationen entsprechen, die eine Inbetriebnahme des Wandverschlusssystems ermöglichen. Mittels des zusätzlichen Konfigurationsparameters kann das Verhalten des Wandverschlusses anschließend auf den individuellen Anwendungsfall angepasst werden. Der zusätzliche Konfigurationsparameter kann beispielsweise einen der Anfangswerte der Konfigurationsparameter der ausgewählten Konfiguration ersetzen.

Bei einer Weiterbildung des Verfahrens wird das Ermitteln des Aufbaus des Wandverschlusssystems und das Auswählen der dem ermittelten Aufbau zugeordneten Konfiguration des Wandverschlusssystems jeweils eigenständig in den einzelnen Funktionsgeräten ausgeführt, wobei sich die einzelnen Funktionsgeräte jeweils eigenständig gemäß der ausgewählten Konfiguration konfigurieren. Dadurch ist nach Anschluss der einzelnen Funktionsgeräte an das Bussystem ein automatisiertes Konfigurieren des Wandverschlusssystems möglich. Die einzelnen Funktionsgeräte können dabei jeweils eigenständig und unabhängig voneinander einzelne oder alle Schritte des angegebenen Verfahrens zum Konfigurieren des Wandverschlusssystems ausführen.

Bei einer Weiterbildung des Verfahrens ist in dem mindestens einen Funktionsgerät eine erste Konfiguration und eine zweite Konfiguration hinterlegt, wobei eine der ersten Konfiguration zugeordnete erste Aufbauvariante ein erstes Funktionsgerät und ein zweites Funktionsgerät umfasst und wobei eine der zweiten Konfiguration zugeordnete zweite Aufbauvariante das erste Funktionsgerät, das zweite Funktionsgerät und ein drittes Funktionsgerät umfasst. Bei der ersten Konfiguration werden von dem ersten Funktionsgerät bereitgestellte Funktionsdaten in dem zweiten Funktionsgerät logisch verknüpft und bei der zweiten Konfiguration werden von dem ersten Funktionsgerät bereitgestellte Funktionsdaten in dem dritten Funktionsgerät logisch verknüpft.

Dies ermöglicht es, die Funktionsdaten des ersten Funktionsgeräts je nach Aufbau des Wandverschlusssystems flexibel entweder in dem zweiten Funktionsgerät oder in dem dritten Funktionsgerät logisch zu verknüpfen. Das dritte Funktionsgerät kann beispielsweise höherwertig sein als das zweite Funktionsgerät und/oder als das erste Funktionsgerät und zusätzlich zu durch das zweite Funktionsgerät bereitgestellten Verknüpfungsmöglichkeiten der Funktionsdaten weitere, insbesondere rechenintensivere Verknüpfungsmöglichkeiten bereitstellen.

Bei einer Weiterbildung des Verfahrens bildet das erste Funktionsgerät eine Eingangseinheit für einen Sensor des Wandverschlusssystems und das zweite Funktionsgerät bildet eine Ausgangseinheit für einen Aktor des Wandverschlusssystems, insbesondere für einen Antrieb des Wandverschlusses, Die logische Verknüpfung der Funktionsdaten des ersten Funktionsgeräts kann insbesondere erfolgen, um Ausgangsdaten zur Ansteuerung des an das zweite Funktionsgerät angeschlossenen Aktors des Wandverschlusssystems zu erzeugen. Gemäß der ersten Konfiguration erfolgt dann das Erzeugen der Ausgangsdaten direkt in dem zweiten Funktionsgerät, wohingegen das Erzeugen der Ausgangsdaten in der zweiten Konfiguration in dem getrennt von dem zweiten Funktionsgerät ausgeführten dritten Funktionsgerät erfolgt. In letzterem Fall werden bei der logischen Verknüpfung erzeugte Ausgangsdaten anschließend über das Bussystem an das zweite Funktionsgerät übermittelt.

Bei einer Weiterbildung des Verfahrens bildet das dritte Funktionsgerät eine zentrale Steuereinheit des Wandverschlusssystems. In der Regel stellt eine zentrale Steuereinheit eine größere Rechenkapazität bereit, als als Eingangs- undloder Ausgangseinheiten ausgebildete Funktionsgeräte. Eine logische Verknüpfung der durch das erste Funktionsgerät bereitgestellten Funktionsdaten in dem zweiten Funktionsgerät gemäß der ersten Konfiguration ermöglicht eine besonders schnelle Reaktion auf Änderung der Funktionsdaten durch das zweite Funktionsgerät, wohingegen eine logische Verknüpfung der bereitgestellten Funktionsdaten in der zentralen Steuereinheit gemäß der zweiten Konfiguration eine umfangreichere Auswertung der Funktionsdaten ermöglicht.

Bei einer Weiterbildung des Verfahrens umfasst lediglich die zweite Aufbauvariante des Wandverschlusssystems das dritte Funktionsgerät. Da sowohl die erste als auch die zweite Konfiguration in den Funktionsgeräten hinterlegt ist, kann das Wandverschlusssystem ohne Anpassung der Funktionsgeräte entweder mit oder ohne drittes Funktionsgerät betrieben werden, beispielsweise mit zentraler Steuereinheit oder ohne zentrale Steuereinheit. Handelt es sich bei dem zweiten Funktionsgerät um den Aktor, etwa den Antrieb des Wandverschlusses, und bei dem ersten Funktionsgerät um den Sensor, insbesondere um einen Schalter zur Aktivierung des Aktors, so kann bei der ersten Konfiguration die logische Verknüpfung bzw. Auswertung der durch den Sensor als Funktionsdaten bereitgestellten Sensordaten direkt in dem Aktor erfolgen und bei der zweiten Konfiguration in dem zusätzlich an das Bussystem angeschlossenen weiteren Funktionsgerät.

Bei einer Weiterbildung des Verfahrens ist das Bussystem als ein serielles Bussystem, insbesondere als ein serielles Bussystem nach dem CAN-Bus Standard, ausgebildet. Das Bussystem kann insbesondere eine direkte Übertragung der Funktionsdaten zwischen den einzelnen Funktionsgeräten ohne Zwischenschaltung eines zentralen Bussteuergeräts bzw. ohne Umleitung der Funktionsdaten über das zentrale Bussteuergerät ermöglichen.

Bei einer Weiterbildung des Verfahrens umfassen die vorgegebenen Aufbauvarianten des Wandverschlusssystems eine erste Aufbauvariante und eine zweite Aufbauvariante und das Wandverschlusssystem bildet in einer der ersten Aufbauvariante zugeordneten ersten Konfiguration ein sicherheitsrelevantes, auf Personen bezogenes, Wandverschlusssystem, insbesondere ein Brandschutzsystem oder ein Rettungswegsystem, und in einer der zweiten Aufbauvariante zugeordneten zweiten Konfiguration ein nicht sicherheitsrelevantes, auf ein Gebäude bezogenes, Wandverschlusssystem, insbesondere ein Zutrittskontrollsystem oder ein Türöffnungssystem.

Das Verfahren zum Konfigurieren des Wandverschlusssystems ermöglicht es also insbesondere, einen sicherheitsrelevanten Anwendungsfall zu erkennen und das Wandverschlusssystem anschließend dem sicherheitsrelevanten Anwendungsfall entsprechend zu konfigurieren. Bei sicherheitsrelevanten Anwendungsfällen können die hinterlegten Konfigurationen jeweils sicherstellen, dass die automatisierten Systemfunktionen des Wandverschlusssystems in den verschiedenen Aufbauvarianten jeweils normgerecht gemäß einschlägiger gesetzlicher Normen, insbesondere gemäß einschlägiger Sicherheitsnormen, ausgeführt werden. Sicherheitsrelevante Systemfunktionen eines sicherheitsrelevanten Wandverschlusssystems können insbesondere ein automatisches Öffnen oder Schließen des Wandverschlusses im Brandfall oder nach Betätigung eines Notschalters sein.

Bei einer Weiterbildung des Verfahrens wird in der ersten Konfiguration eine erste Systemfunktion des Wandverschlusssystems priorisiert gegenüber einer zweiten Systemfunktion des Wandverschlusssystems und in der zweiten Konfiguration die zweite Systemfunktion des Wandverschlusssystems priorisiert gegenüber der ersten Systemfunktion des Wandverschlusssystems ausgeführt.

Bei einer Weiterbildung des Verfahrens bewirkt die erste Systemfunktion ein Bewegen des Wandverschlusses, insbesondere ein Öffnen oder Schließen des Wandverschlusses, und die zweite Systemfunktion eine Kollisionsvermeidung bei einer Bewegung des Wandverschlusses. Insbesondere bei einem Wandverschlusssystem, welches als ein Antriebssystem ein automatisiertes Öffnen oder Schließen des Wandverschlusses bewirkt, ist bei einem sicherheitsrelevanten Wandverschlusssystem im Gefahrenfall ein Öffnen oder Schließen des Wandverschlusses zum Schutze der im Gebäude befindlichen Personen wichtiger als ein Ausschluss von Verletzungen einzelner am Wandverschluss befindlicher Personen.

Eine Weiterbildung des Verfahrens umfasst nach dem Ermitteln des Aufbaus des Wandverschlusssystems ein Aussenden einer Anzahl von Signalen, die einer Gesamtzahl von Funktionsgeräten entspricht, die in dem ermittelten Aufbau des Wandverschlusssystems vorhanden ist, durch mindestens eines der Funktionsgeräte. Dadurch kann auf einfache Weise überprüft werden, ob alle an das Bussystem angeschlossenen Funktionsgeräte erkannt wurden und folglich eine korrekte Auswahl der Konfiguration vorgenommen wurde.

Es wird ferner ein Wandverschlusssystem für einen Wandverschluss, insbesondere für eine Tür oder ein Fenster, mit den Merkmalen des Anspruchs 17 angegeben.

Die Erfindung wird nachfolgend anhand von Figuren erläutert. Dabei zeigen in jeweils schematischer Darstellung:
- Fig. 1: eine Wandverschlussanlage mit einer ersten Aufbauvariante eines Wandverschlusssystems;
- Fig. 2: ein Funktionsgerät des Wandverschlusssystems;
- Fig. 3: ein Verfahren zum Konfigurieren des Wandverschlusssystems;
- Fig. 4: eine zweite Aufbauvariante des Wandverschlusssystems;
- Fig. 5: eine in dem Funktionsgerät hinterlegte Parameterdatenbank mit Konfiguration der zweiten Aufbauvariante des Wandverschlusssystems;
- Fig. 6: eine dritte Aufbauvariante des Wandverschlusssystems;
- Fig. 7: eine vierte Aufbauvariante des Wandverschlusssystems.

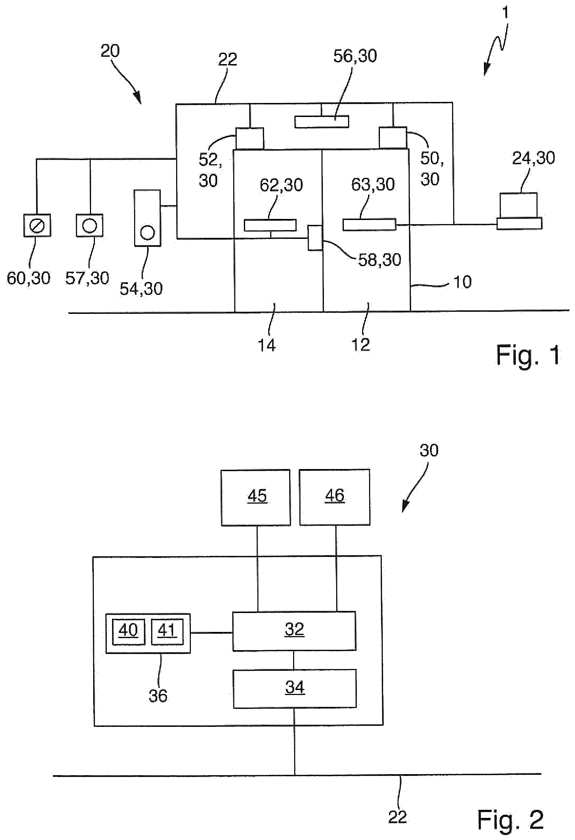

Fig. 1 zeigt beispielhaft eine Wandverschlussanlage 1, welche als Türanlage ausgebildet ist und einen als doppelflügelige Tür ausgebildeten Wandverschluss 10 umfasst. Die Wandverschlussanlage 1 umfasst ein als Türsystem ausgebildetes Wandverschlusssystem 20 zum Ausführen automatisierter Funktionen des Wandverschlusses 10. Das Wandverschlusssystem 20 umfasst ein Bussystem 22, sowie eine Mehrzahl an das Bussystem 22 angeschlossener Funktionsgeräte 30.

Die Funktionsgeräte 30 sind ausgebildet als eine an einem Gangflügel 12 des Wandverschlusses 10 angeordnete Antriebseinheit 50, eine an einem Standflügel 14 des Wandverschlusses 10 angeordnete weitere Antriebseinheit 52, ein Zentralgerät 54 mit einem integrierten Notauftaster, eine über dem Wandverschluss 10 angeordnete Bewegungssensoreinheit 56, eine neben dem Wandverschluss 10 angeordnete Aktivierungssensoreinheit 57, eine Motorschlosseinheit 58, eine Programmschaltereinheit 60, eine an dem Standflügel 14 angeordnete Entriegelungseinheit 62 und eine an dem Gangflügel 12 angeordnete weitere Entriegelungseinheit 63. An das Wandverschlusssystem 20 ist außerdem eine Benutzerschnittstelle 24 in Form eines Programmiergeräts angeschlossen.

An die Antriebseinheiten 50, 52 sind jeweils Antriebe zur automatisierten Bewegung der Flügel 12, 14 des Wandverschlusses 10 angeschlossen. Die Bewegungssensoreinheit 56 umfasst einen Bewegungssensor zur Detektion von Objekten, die sich dem Wandverschluss 10 nähern, etwa einen Infrarotsensor oder einen Radarsensor. Die Aktivierungssensoreinheit 57 umfasst einen Schalter, um ein automatisiertes Öffnen der Flügel 12, 14 des Wandverschlusses 10 auszulösen. An die Motorschlosseinheit 58 ist ein Motorschloss zum automatisierten Verriegeln des Wandverschlusses 10 angeschlossen. Die Programmschaltereinheit 60 umfasst einen Programmschalter zur Auswahl verschiedener Steuerprogramme des Wandverschlusssystems 20, wobei die Steuerprogramme beispielsweise einen Nachtmodus, bei dem der Wandverschluss 10 verriegelt ist, und einen Tagmodus, bei dem der Wandverschluss 10 entriegelt ist, umfassen.

Die Entriegelungseinheiten 62, 63 sind auf den Flügeln 12, 14 des Wandverschlusses 10 angeordnet und ermöglichen ein Entriegeln des Wandverschlusses 10. Die Entriegelungseinheiten 62, 63 sind als mechanische Entriegelungseinheiten ausgeführt, welche jeweils einen Sensor umfassen, um einen Entriegelungsvorgang zu erkennen und den Entriegelungsvorgang anzeigende Funktionsdaten über das Bussystem 22 zu versenden.

Die Bewegungssensoreinheit 56, die Aktivierungssensoreinheit 57 und die Programmschaltereinheit 60 stellen jeweils Eingangseinheiten des Wandverschlusssystems 20, die Antriebseinheiten 50, 52 und die Motorschlosseinheit 58 stellen jeweils Ausgangseinheiten des Wandverschlusssystems 20 dar. Alle Funktionsgeräte 30, insbesondere das Zentralgerät 54, umfassen eine Logikeinheit zur logischen Verknüpfung von durch die Eingangseinheiten erzeugten und über das Bussystem 22 übertragenen Eingangsdaten und zur Erzeugung von Ausgangsdaten zur Ansteuerung der an die Ausgangseinheiten angeschlossenen Aktoren. Das Zentralgerät 54 fungiert als eine zentrale Steuereinheit des Wandverschlusssystems 20 zur Steuerung einer geräteübergreifenden Systemfunktion. Das Zentralgerät 54 stellt zugleich eine Eingangseinheit dar, mittels derer ein Schaltzustand des an dem Zentralgerät 54 angeordneten Notauftasters eingelesen wird. Das hier als Zentralgerät 54 beschriebene Gerät ist so nicht zwingend vorgeschrieben und nur beispielhaft als solches definiert. Falls nicht bereits automatisch ein zentrales Gerät vorhanden ist, wird ein variables Gerät sich selbst als ein zentrales Gerät definieren.

Wie in Fig. 2 schematisch dargestellt ist, sind die Funktionsgeräte 30 jeweils über eine Verbindungseinheit 34 mit dem Bussystem 22 verbunden. Die Verbindungseinheit 34 ermöglicht eine Kommunikation über das Bussystem 22 gemäß dem verwendeten Kommunikationsprotokoll. Mit der Verbindungseinheit 34 ist eine Verarbeitungseinheit 32 verbunden, welche bei einem als Eingangseinheit ausgebildeten Funktionsgerät 30 anhand hinterlegter Einlesebefehle Sensorsignale von einem Sensor 46 einliest und in Sensordaten zur Übertragung über das Bussystem 22 umwandelt oder bei einem als Ausgangseinheit ausgebildeten Funktionsgerät 30 anhand hinterlegter Ausgabebefehle und basierend auf über das Bussystem 22 übertragenen Aktordaten Ausgangssignale zur Ansteuerung eines Aktors 45 erzeugt. Die Verarbeitungseinheit 32 kann außerdem dazu ausgebildet sein, Funktionsdaten, insbesondere Sensordaten, anhand hinterlegter Logikbefehle eines Steuerprogramms logisch zu verknüpfen und dabei erzeugte Aktordaten über das Bussystems 22 oder direkt an den an das Funktionsgerät 30 angeschlossenen Aktor 45 auszugeben.

Ferner umfassen die Funktionsgeräte 30 jeweils eine Speichereinheit 36, in der mögliche Konfigurationen 40, 41 des Wandverschlusssystems 20, beispielsweise eine Konfiguration 40 und eine weitere Konfiguration 41, hinterlegt sind. Insbesondere sind in den Speichereinheiten 36 der einzelnen Funktionsgeräte 30 jeweils mögliche Gerätekonfigurationen der betreffenden Funktionsgeräte 30 hinterlegt sind. Die Konfigurationen 40, 41 sind dabei unterschiedlichen Aufbauvarianten des Wandverschlusssystems 20 zugeordnet und werden von den Funktionsgeräten 30 anhand eines Aufbaus des Wandverschlusssystems 20, welches die Funktionsgeräte 30 aus über das Bussystem 22 übertragenen Initialisierungsdaten ermitteln, ausgewählt.

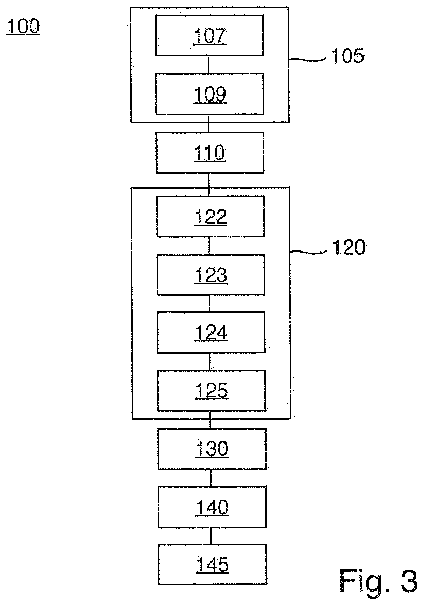

In Fig. 3 ist ein beim Konfigurieren des Wandverschlusssystems 20 in den einzelnen Funktionsgeräten 30 ausgeführtes Verfahren 100 zum Konfigurieren des Wandverschlusssystems 20 dargestellt. Das Verfahren 100 kann nach einer Initialisierung der Busteilnehmer und gegebenenfalls nach einer Zuweisung eindeutiger, den Aufbau des Wandverschlusssystems kennzeichnender Parameterwerte der Funktionsgeräte 30 ausgeführt werden.

Das Verfahren 100 umfasst zunächst ein Ermitteln 105 des Aufbaus des Wandverschlusssystems 20 anhand von über das Bussystem 22 zwischen den Funktionsgeräten 30 ausgetauschten Initialisierungsdaten. Dabei erfolgt ein Aussenden 107 von die Initialisierungsdaten umfassenden Initialisierungsnachrichten durch die einzelnen Funktionsgeräte 30 und ein Empfangen 109 der Initialisierungsnachrichten durch die übrigen Funktionsgeräte 30. Anhand der empfangenen Initialisierungsnachrichten und der darin enthaltenen Initialisierungsdaten erkennen die einzelnen Funktionsgeräte 30 Anzahl, Gerätetyp und Funktion der übrigen an das Bussystem 22 angeschlossenen Funktionsgeräte 30,

Anschließend erfolgt ein Auswählen 110 einer dem ermittelten Aufbau des Wandverschlusssystems 20 zugeordneten Konfiguration 40, 41 des Wandverschlusssystems 20 durch die einzelnen Funktionsgeräte 30 und ein Konfigurieren 120 der Funktionsgeräte 30 anhand der ausgewählten Konfiguration 40, 41 des Wandverschlusssystems 20. Das Konfigurieren 120 umfasst insbesondere ein Festlegen 122 von Datenverbindungen in den Funktionsgeräten 30, ein Festlegen 123 von Einlesebefehlen zum Einlesen von Sensordaten in als Eingangseinheiten fungierenden Funktionsgeräten 30, ein Festlegen 124 von Ausgabebefehlen zum Ausgeben von Aktordaten in als Ausgangseinheiten fungierenden Funktionsgeräten 30 und ein Festlegen 125 von Logikbefehlen zur Verknüpfung der Sensordaten und zur Erzeugung der Aktordaten in als Logikeinheiten fungierenden Funktionsgeräten 30.

Das Verfahren 100 umfasst ferner ein Aussenden 130 einer Anzahl von Signalen durch die einzelnen Funktionsgeräte 30, wobei die Anzahl der ausgesendeten Signale einer Gesamtzahl von durch das jeweilige Funktionsgerät 30 ermittelten Funktionsgeräten 30 an dem Bussystem 22 entspricht. Die Signale können beispielsweise als Lichtsignale mittels an den einzelnen Funktionsgeräten 30 vorgesehener Leuchten ausgesendet werden. Bei als Ausgangseinheiten ausgebildeten Funktionsgeräten 30 können die Signale auch als einzelne Bewegungsimpulse der angeschlossenen Aktoren ausgesendet werden.

Nach dem automatischen Konfigurieren 120 gemäß der dem ermittelten Aufbau des Wandverschlusssystems 20 zugeordneten Konfiguration 40, 41 kann ein benutzergesteuertes Anpassen der ausgewählten Konfiguration 40, 41 erfolgen. Hierzu umfasst das Verfahren ein Einlesen 140 eines oder mehrerer zusätzlicher Konfigurationsparameter über die Benutzerschnittstelle 24 und ein Anpassen 145 der automatisiert vorgenommenen Konfiguration anhand der eingelesenen Konfigurationsparameter.

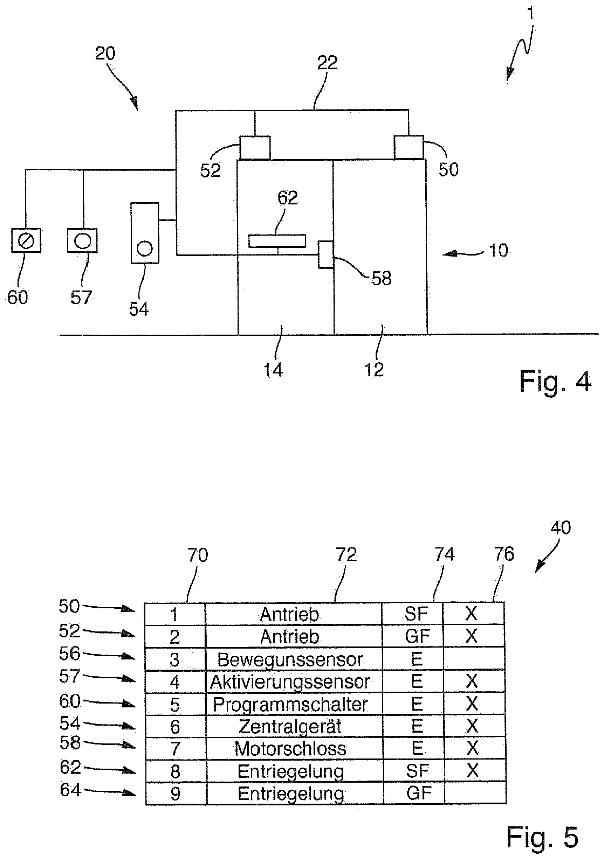

Das Verfahren 100 ermöglicht es, die einzelnen Funktionsgeräte 30 des Wandverschlusssystems 20 jeweils abhängig von der realisierten Aufbauvariante des Wandverschlusssystems 20 automatisiert zu konfigurieren. Dabei kann eine in Fig. 4 dargestellte zweite Aufbauvariante des Wandverschlusssystems 20 lediglich einen Teil der in Fig. 1 dargestellten Funktionsgeräte 30 der ersten Aufbauvariante des Wandverschlusssystems 20 umfassen. In der zweiten Aufbauvariante ist das Wandverschlusssystem 20 ohne die Benutzerschnittstelle 24, die Bewegungssensoreinheit 56 und die weitere Entriegelungseinheit 63 ausgebildet.

Mittels der in den Initialisierungsnachrichten übertragenen Initialisierungsdaten erhalten die einzelnen Funktionsgeräte 30 jeweils genügend Informationen, um die durch das Wandverschlusssystem 20 realisierte Aufbauvariante eindeutig zu bestimmen. In Fig. 5 sind die Initialisierungsdaten der Konfiguration 40, die der in Fig. 4 dargestellten zweiten Aufbauvariante des Wandverschlusssystems 20 entspricht, dargestellt. Nach dem Austausch der Initialisierungsdaten liegen jeweils in allen Funktionsgeräten 30 eine Kennung 70, ein Gerätetyp 72, sowie eine Funktionsbezeichnung 74 der einzelnen an das Bussystem 22 angeschlossenen Funktionsgeräte 30 vor.

Die Kennung 70 erlaubt eine eindeutige Identifikation der einzelnen Funktionsgeräte 30 und kann eine Adresse, insbesondere eine Absenderadresse der Funktionsgeräte 30 bilden. Erfolgt die Datenübertragung über das Bussystem 22 gemäß dem CAN-Bus Protokoll so kann die Kennung 70 insbesondere eine sogenannte *ID* der Funktionsgeräte 30 darstellen. Die Funktionsbezeichnung 74 gibt jeweils eine Funktion an, die die einzelnen Funktionsgeräten 30 in dem Wandverschlusssystem 20 ausführen. Bei Funktionsgeräten 30, die in der realisierten Aufbauvariante des Wandverschlusssystems 20 nur einmal vorhanden sind, ist die Funktion bereits durch den Gerätetyp 72 eindeutig festgelegt. Bei Funktionsgeräten 30, die mehrfach vorhanden sind, wie beispielsweise die Antriebseinheiten 50, 52 oder die Entriegelungseinheiten 62, 63, ist die Funktion erst über die Funktionsbezeichnung 74 eindeutig festgelegt. In den letztgenannten Fällen gibt die Funktionsbezeichnung 74 an, ob das betreffende Funktionsgerät 30 dem Gangflügel 12 (GF) oder dem Standflügel 14 (SF) des Wandverschlusses 10 zugeordnet ist, in allen übrigen Fällen kennzeichnet die Funktionsbezeichnung 74 die Funktion lediglich als eindeutig (E).

Die der erkannten Aufbauvariante des Wandverschlusssystems 20 zugeordnete Konfiguration wird jeweils in einer Parameterdatenbank der einzelnen Funktionsgeräte 30 hinterlegt, wobei die Konfiguration durch Fig. 5 definiert wird.

Die in Fig. 5 dargestellte Konfiguration 40, welche der in Fig. 4 dargestellten zweiten Aufbauvariante des Wandverschlusssystems 20 zugeordnet ist, umfasst jeweils einen Eintrag für alle grundsätzlich automatisch konfigurierbaren und an das Bussystem 22 anschließbaren Funktionsgeräte 30, wie sie in Fig. 1 dargestellt sind. Die einzelnen Einträge umfassen dabei jeweils die Kennung 70, den Gerätetyp 72, die Funktionsbezeichnung 74, sowie einen Anwesenheitsparameter 76, der angibt, ob das betreffende Funktionsgerät 30 an das Bussystem 22 angeschlossen ist oder nicht. Die Funktionsbezeichnung 74 kann die Werte GF, SF oder E annehmen, wobei der Wert GF eine Zuordnung des betreffenden Funktionsgeräts 30 zu dem Gangflügel 12 des Wandverschlusses 10 und der Wert SF eine Zuordnung des betreffenden Funktionsgeräts 30 zu dem Standfiügel 14 des Wandverschlusses 10 anzeigen. Der Wert E zeigt an, dass die Funktion des betreffenden Funktionsgeräts 30 bereits eindeutig aus dem Gerätetyp 72 des Funktionsgeräts 30 hervorgeht.

Im Einzelnen umfasst die in Fig. 5 dargestellte Konfiguration 40 Einträge für die Antriebseinheit 50, für die weitere Antriebseinheit 52, für die in der zweiten Aufbauvariante nicht vorhandene Bewegungssensoreinheit 56, für die Aktivierungssensoreinheit 57, für die Programmschaltereinheit 60, für das Zentralgerät 54, für die Motorschlosseinheit 58, für die an dem Standflügel 14 angeordnete Entriegelungseinheit 62 und die in der zweiten Aufbauvariante nicht vorhandene und an dem Gangflügel 12 anordenbare weitere Entriegelungseinheit 64.

Bei der zweiten Aufbauvariante des Wandverschlusssystems 20 gemäß den Figuren 4 und 5 erfolgt die logische Verknüpfung der durch die Eingangseinheiten erzeugten Eingangsdaten und das Erzeugen der für die Ausgangseinheiten bestimmten Ausgangsdaten, welche zur Realisierung einer geräteübergreifenden Systemfunktion, insbesondere einer Fluchttürfunktion notwendig ist, in der Logikeinheit des Zentralgeräts 54.

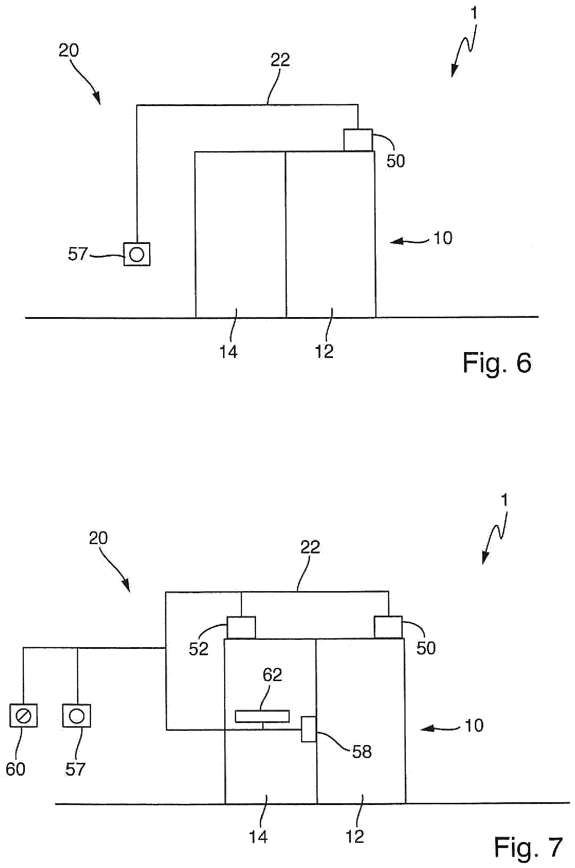

Fig. 6 zeigt eine dritte Aufbauvariante des Wandverschlusssystems 20, welche lediglich die Antriebseinheit 50, sowie die mit der Antriebseinheit 50 über das Bussystem 22 verbundene Aktivierungssensoreinheit 57 umfasst. Fig. 7 zeigt eine vierte Aufbauvariante des Wandverschlusssystems 20, welche bis auf das Zentralgerät 54 alle auch in Fig. 4 dargestellten Funktionsgeräte 30 der zweiten Aufbauvariante umfasst. Anders als bei der zweiten Aufbauvariante des Wandverschlusssystems 20 erfolgt bei den in den Figuren 6 und 7 gezeigten Aufbauvarianten die logische Verknüpfung der Eingangsdaten und das Erzeugen der Ausgangsdaten für die geräteübergreifende Systemfunktion nicht in einem Zentralgerät, sondern direkt in der Antriebseinheit 50 und/oder der weiteren Antriebseinheit 52, Insbesondere sind die Antriebseinheiten 50, 52 derart konfiguriert, dass nach Betätigung des Tasters der Aktivierungssensoreinheit 57 ein automatisches und koordiniertes Öffnen des Wandverschlusses 10 durch die Antriebe der Antriebseinheiten 50, 52 erfolgt.

Beim Konfigurieren der einzelnen Funktionsgeräte 30 wird insbesondere festgelegt, welche durch das Funktionsgerät 30 über das Bussystem 22 empfangenen Funktionsdaten ausgewertet werden und wie die Funktionsdaten in einem auf dem betreffenden Funktionsgerät 30 ablaufenden Anwendungsprogramm verwendet werden, insbesondere auf welche Variablen des Anwendungsprogramms die einzelnen Funktionsdaten abgebildet werden. Das Konfigurieren der einzelnen Funktionsgeräte 30 kann ferner ein Auswählen der auf den Funktionsgeräten 30 auszuführenden Anwendungsprogramme umfassen.

### Bezugszeichenliste

- 1: Wandverschlussanlage
- 10: Wandverschluss
- 12: Gangflügel
- 14: Standflügel
- 20: Wandverschlusssystem
- 22: Bussystem
- 24: Benutzerschnittstelle
- 30: Funktionsgerät
- 32: Verarbeitungseinheit
- 34: Verbindungseinheit
- 36: Speichereinheit
- 40: hinterlegte Konfiguration mit Daten
- 41: weitere hinterlegte Konfiguration
- 45: Aktor
- 46: Sensor
- 50: Antriebseinheit
- 52: weitere Antriebseinheit
- 54: Zentralgerät
- 56: Bewegungssensoreinheit
- 57: Aktivierungssensoreinheit
- 58: Motorschlosseinheit
- 60: Programmschaltereinheit
- 62: Entriegelungseinheit
- 63: weitere Entriegelungseinheit
- 70: Kennung
- 72: Gerätetyp
- 74: Funktionsbezeichnung
- 76: Anwesenheitsparameter

- 100: Verfahren
- 105: Ermitteln eines Aufbaus
- 107: Aussenden einer Initialisierungsnachricht
- 109: Empfangen von Initialisierungsnachrichten
- 110: Auswählen einer dem Aufbau zugeordneten Konfiguration
- 120: Konfigurieren
- 122: Festlegen von Datenverbindungen
- 123: Festlegen von Einlesebefehlen
- 124: Festlegen von Ausgabebefehlen
- 125: Festlegen von Logikbefehlen
- 130: Aussenden einer Anzahl von Signalen
- 140: Einlesen eines zusätzlichen Konfigurationsparameters
- 145: Anpassen der Konfiguration

## Patentansprüche

1. Verfahren (100) zum Konfigurieren eines Wandverschlusssystems (20) für einen Wandverschluss (10), insbesondere für eine Tür oder ein Fenster, wobei das Wandverschlusssystem (20) mehrere über ein Bussystem (22) miteinander verbundene Funktionsgeräte (30) zum Ausführen automatisierter Systemfunktionen des Wandverschlusssystems (20) umfasst,
wobei die Funktionsgeräte (30) dazu ausgebildet sind, Funktionsdaten zum Ausführen der Systemfunktionen über das Bussystem (22) auszutauschen, wobei das Verfahren (100) die folgenden Schritte umfasst:
- Ermitteln (105) eines Aufbaus des Wandverschlusssystems (20) durch mindestens eines der Funktionsgeräte (30) anhand über das Bussystem (22) übertragener Initialisierungsdaten der Funktionsgeräte (30),
- Auswählen (110) einer dem ermittelten Aufbau zugeordneten Konfiguration (40, 41) des Wandverschlusssystems (20) aus einer Mehrzahl von in dem mindestens einen der Funktionsgeräte (30) hinterlegten und jeweils unterschiedlichen Aufbauvarianten des Wandverschlusssystems (20) zugeordneten Konfigurationen (40, 41) des Wandverschlusssystems (20) durch das mindestens eine der Funktionsgeräte (30),
- Konfigurieren (120) der Funktionsgeräte (30) gemäß der ausgewählten Konfiguration (40, 41),
**dadurch gekennzeichnet, dass**
die den unterschiedlichen Aufbauvarianten zugeordneten Konfigurationen in mehreren Funktionsgeräten (30) hinterlegt sind,
das Ermitteln (105) des Aufbaus des Wandverschlusssystems (20) und das Auswählen (110) der dem ermittelten Aufbau zugeordneten Konfiguration (40, 41) des Wandverschlusssystems (20) jeweils eigenständig in den mehreren Funktionsgeräten (30) ausgeführt wird, und
sich die einzelnen Funktionsgeräte (30) jeweils eigenständig gemäß der ausgewählten Konfiguration (40, 41) konfigurieren.

2. Verfahren (100) nach Anspruch 1,
wobei sich die Aufbauvarianten des Wandverschlusssystems (20) durch die an das Bussystem (22) angeschlossenen Funktionsgeräte (30) und/oder durch die den Funktionsgeräten (30) zugewiesenen Gerätefunktionen unterscheiden.

3. Verfahren (100) nach einem der vorhergehenden Ansprüche,
wobei die Initialisierungsdaten mittels von den einzelnen Funktionsgeräten (30) gesendeter Rundspruchnachrichten, die von den jeweiligen übrigen Funktionsgeräten (30) ausgewertet werden, übertragen werden.

4. Verfahren (100) nach einem der vorhergehenden Ansprüche, wobei das Konfigurieren (120) ein Festlegen (122) von logischen Datenverbindungen umfasst, anhand derer während des Betriebs des Wandverschlusssystems (20) Funktionsdaten zwischen den Funktionsgeräten (30) ausgetauscht werden.

5. Verfahren (100) nach einem der vorhergehenden Ansprüche, wobei das Konfigurieren (120) ein Festlegen (123) von Einlesebefehlen für Eingangseinheiten bildende Funktionsgeräte (30) umfasst, um ein Einlesen von Eingangssignalen zu steuern, und/oder
wobei das Konfigurieren (120) ein Festlegen (124) von Ausgabebefehlen für Ausgangseinheiten bildende Funktionsgeräte (30) umfasst, um ein Ausgeben von Ausgangssignalen zu steuern.

6. Verfahren (100) nach einem der vorhergehenden Ansprüche,
wobei das Konfigurieren (120) ein Festlegen (125) von Logikbefehlen zur logischen Verknüpfung der Funktionsdaten in Logikeinheiten bildenden Funktionsgeräten (30) umfasst.

7. Verfahren (100) nach einem der vorhergehenden Ansprüche, umfassend:
- Einlesen (140) mindestens eines zusätzlichen Konfigurationsparameters über eine Benutzerschnittstelle (24) des Wandverschlusssystems (20),
- Anpassen (145) der ausgewählten Konfiguration (40, 41) anhand des eingelesenen Konfigurationsparameters.

8. Verfahren (100) nach einem der vorhergehenden Ansprüche,
wobei in dem mindestens einen Funktionsgerät (30) eine erste Konfiguration (40, 41) und eine zweite Konfiguration (40, 41) hinterlegt ist,
wobei eine der ersten Konfiguration (40, 41) zugeordnete erste Aufbauvariante ein erstes Funktionsgerät (30) und ein zweites Funktionsgerät (30) umfasst,
wobei eine der zweiten Konfiguration (40, 41) zugeordnete zweite Aufbauvariante das erste Funktionsgerät (30), das zweite Funktionsgerät (30) und ein drittes Funktionsgerät (30) umfasst,
wobei nach der ersten Konfiguration (40, 41) von dem ersten Funktionsgerät (30) bereitgestellte Funktionsdaten in dem zweiten Funktionsgerät (30) logisch verknüpft werden und
wobei nach der zweiten Konfiguration (40, 41) von dem ersten Funktionsgerät (30) bereitgestellte Funktionsdaten in dem dritten Funktionsgerät (30) logisch verknüpft werden.

9. Verfahren (100) nach Anspruch 8,
wobei das erste Funktionsgerät (30) eine Eingangseinheit (56, 57, 60, 62, 63) für einen Sensor (46) des Wandverschlusssystems (20) und das zweite Funktionsgerät (30) eine Ausgangseinheit (50, 52, 58) für einen Aktor (45) des Wandverschlusssystems (20), insbesondere für einen Antrieb des Wandverschlusses (10), bildet.

10. Verfahren (100) nach einem der Ansprüche 8 bis 9,
wobei das dritte Funktionsgerät (30) eine zentrale Steuereinheit (54) des Wandverschlusssystems (20) bildet.

11. Verfahren (100) nach einem der Ansprüche 8 bis 10,
wobei lediglich die zweite Aufbauvariante des Wandverschlusssystems (20) das dritte Funktionsgerät (30) umfasst.

12. Verfahren (100) nach einem der vorhergehenden Ansprüche,
wobei das Bussystem (22) als ein serielles Bussystem, insbesondere als ein serielles Bussystem nach dem CAN-Bus Protokoll, ausgebildet ist.

13. Verfahren (100) nach einem der vorhergehenden Ansprüche,
wobei die vorgegebenen Aufbauvarianten des Wandverschlusssystems (20) eine erste Aufbauvariante und eine zweite Aufbauvariante umfassen, wobei das Wandverschlusssystem (20) in einer der ersten Aufbauvariante zugeordneten ersten Konfiguration (40, 41) ein personenrelevantes Wandverschlusssystem (20), insbesondere ein Brandschutzsystem oder ein Rettungswegsystem, und in einer der zweiten Aufbauvariante zugeordneten zweiten Konfiguration (40, 41) ein gebäudeschutzrelevantes Wandverschlusssystem (20), insbesondere ein Zutrittskontrollsystem, bildet.

14. Verfahren (100) nach Anspruch 13,
wobei in der ersten Konfiguration (40, 41) eine erste Systemfunktion des Wandverschlusssystems (20) priorisiert gegenüber einer zweiten Systemfunktion des Wandverschlusssystems (20) ausgeführt wird,
wobei in der zweiten Konfiguration (40, 41) die zweite Systemfunktion des Wandverschlusssystems (20) priorisiert gegenüber der ersten Systemfunktion des Wandverschlusssystems (20) ausgeführt wird.

15. Verfahren (100) nach Anspruch 14,
wobei die erste Systemfunktion ein Bewegen des Wandverschlusses (10) und die zweite Systemfunktion eine Kollisionsvermeidung bei einer Bewegung des Wandverschlusses (10) bewirkt.

16. Verfahren (100) nach einem der vorhergehenden Ansprüche,
wobei das Verfahren (100) nach dem Ermitteln (105) des Aufbaus des Wandverschlusssystems (20) umfasst:
- Aussenden (130) einer Anzahl von Signalen, die einer Gesamtzahl von Funktionsgeräten (30) entspricht, die in dem ermittelten Aufbau des Wandverschlusssystems (20) vorhanden ist, durch mindestens eines der Funktionsgeräte (30).

17. Wandverschlusssystem (20) für einen Wandverschluss (10), insbesondere für eine Tür oder ein Fenster,
wobei das Wandverschlusssystem (20) mehrere Funktionsgeräte (30) zum Ausführen automatisierter Systemfunktionen des Wandverschlusssystems (20) umfasst,
wobei die Funktionsgeräte (30) über ein Bussystem (22) miteinander verbunden und dazu ausgebildet sind, Funktionsdaten zum Ausführen der Systemfunktionen über das Bussystem (22) auszutauschen,
wobei die Funktionsgeräte (30) dazu ausgebildet sind, Initialisierungsdaten über das Bussystem (22) zu übertragen,
wobei mehrere der Funktionsgeräte (30) dazu ausgebildet sind, jeweils eigenständig anhand der Initialisierungsdaten einen Aufbau des Wandverschlusssystems (20) zu ermitteln,
wobei die mehreren der Funktionsgeräte (30) dazu ausgebildet sind, jeweils eigenständig eine dem ermittelten Aufbau zugeordnete Konfiguration (40, 41) des Wandverschlusssystems (20) aus einer Mehrzahl von in den mehreren Funktionsgeräten (30) hinterlegten und jeweils unterschiedlichen Aufbauvarianten des Wandverschlusssystems (20) zugeordneten Konfigurationen (40, 41) des Wandverschlusssystems (20) auszuwählen, wobei die mehreren der Funktionsgeräte (30) jeweils dazu ausgebildet sind, sich jeweils eigenständig gemäß der ausgewählten Konfiguration (40, 41) zu konfigurieren.

## Claims

1. Method (100) for configuring a wall closure system (20) for a wall closure (10), in particular for a door or a window, wherein the wall closure system (20) comprises a plurality of functional devices (30), connected to one another via a bus system (22), for carrying out automated system functions of the wall closure system (20),
wherein the functional devices (30) are designed to exchange functional data for carrying out the system functions via the bus system (22), wherein the method (100) comprises the following steps:
- at least one of the functional devices (30) determining (105) a structure of the wall closure system (20) based on initialization data, transmitted via the bus system (22), in relation to the functional devices (30),
- the at least one of the functional devices (30) selecting (110) a configuration (40, 41) of the wall closure system (20), associated with the determined structure, from a multiplicity of configurations (40, 41) of the wall closure system (20), stored in the at least one of the functional devices (30) and each associated with different structural variants of the wall closure system (20),
- configuring (120) the functional devices (30) in accordance with the selected configuration (40, 41), **characterized in that**
the configurations associated with the different structural variants are stored in a plurality of functional devices (30),
the determination (105) of the structure of the wall closure system (20) and the selection (110) of the configuration (40, 41) of the wall closure system (20) associated with the determined structure is carried out in each case independently in the plurality of functional devices (30), and
the individual functional devices (30) configure themselves in each case independently in accordance with the selected configuration (40, 41).

2. Method (100) according to Claim 1,
wherein the structural variants of the wall closure system (20) differ in terms of the functional devices (30) connected to the bus system (22) and/or in terms of the device functions allocated to the functional devices (30) .

3. Method (100) according to either of the preceding claims,
wherein the initialization data are transmitted by way of broadcast messages that are sent by the individual functional devices (30) and that are evaluated by the respective other functional devices (30).

4. Method (100) according to one of the preceding claims,
wherein the configuration (120) comprises defining (122) logic data links based on which functional data are exchanged between the functional devices (30) during operation of the wall closure system (20).

5. Method (100) according to one of the preceding claims,
wherein the configuration (120) comprises defining (123) read-in commands for functional devices (30) that form input units, in order to control the reading-in of input signals, and/or
wherein the configuration (120) comprises defining (124) output commands for functional devices (30) that form output units, in order to control the outputting of output signals.

6. Method (100) according to one of the preceding claims,
wherein the configuration (120) comprises defining (125) logic commands for logically linking the functional data in functional devices (30) that form logic units.

7. Method (100) according to one of the preceding claims, comprising:
- reading in (140) at least one additional configuration parameter via a user interface (24) of the wall closure system (20),
- adapting (145) the selected configuration (40, 41) on the basis of the read-in configuration parameter.

8. Method (100) according to one of the preceding claims,
wherein a first configuration (40, 41) and a second configuration (40, 41) are stored in the at least one functional device (30),
wherein a first structural variant associated with the first configuration (40, 41) comprises a first functional device (30) and a second functional device (30), wherein a second structural variant associated with the second configuration (40, 41) comprises the first functional device (30), the second functional device (30) and a third functional device (30),
wherein, after the first configuration (40, 41), functional data provided by the first functional device (30) are linked logically in the second functional device (30), and
wherein, after the second configuration (40, 41), functional data provided by the first functional device (30) are linked logically in third functional device (30) .

9. Method (100) according to Claim 8,
wherein the first functional device (30) forms an input unit (56, 57, 60, 62, 63) for a sensor (46) of the wall closure system (20) and the second functional device (30) forms an output unit (50, 52, 58) for an actuator (45) of the wall closure system (20), in particular for a drive of the wall closure (10).

10. Method (100) according to either of Claims 8 and 9, wherein the third functional device (30) forms a central control unit (54) of the wall closure system (20).

11. Method (100) according to one of Claims 8 to 10, wherein only the second structural variant of the wall closure system (20) comprises the third functional device (30) .

12. Method (100) according to one of the preceding claims,
wherein the bus system (22) is designed as a serial bus system, in particular a serial bus system in accordance with the CAN bus protocol.

13. Method (100) according to one of the preceding claims,
wherein the predefined structural variants of the wall closure system (20) comprise a first structural variant and a second structural variant, wherein the wall closure system (20), in a first configuration (40, 41) associated with the first structural variant, forms a people-related wall closure system (20), in particular a fire protection system or an emergency escape route system and, in a second configuration (40, 41) associated with the second structural variant, forms a building protection-related wall closure system (20), in particular an entry control system.

14. Method (100) according to Claim 13,
wherein, in the first configuration (40, 41), a first system function of the wall closure system (20) is carried out with priority over a second system function of the wall closure system (20),
wherein, in the second configuration (40, 41), the second system function of the wall closure system (20) is carried out with priority over the first system function of the wall closure system (20).

15. Method (100) according to Claim 14,
wherein the first system function brings about movement of the wall closure (10) and the second system function brings about collision avoidance in the event of movement of the wall closure (10).

16. Method (100) according to one of the preceding claims,
wherein the method (100), after determining (105) the structure of the wall closure system (20), comprises:
- at least one of the functional devices (30) emitting (130) a number of signals that corresponds to a total number of functional devices (30) that is present in the determined structure of the wall closure system (20).

17. Wall closure system (20) for a wall closure (10), in particular for a door or a window,
wherein the wall closure system (20) comprises a plurality of functional devices (30) for carrying out automated system functions of the wall closure system (20),
wherein the functional devices (30) are connected to one another via a bus system (22) and designed to exchange functional data for carrying out the system functions via the bus system (22),
wherein the functional devices (30) are designed to transmit initialization data via the bus system (22), wherein a plurality of the functional devices (30) are designed to determine a structure of the wall closure system (20) in each case independently on the basis of the initialization data,
wherein the plurality of the functional devices (30) are designed to select, in each case independently, a configuration (40, 41) of the wall closure system (20), associated with the determined structure, from a multiplicity of configurations (40, 41) of the wall closure system (20), stored in the plurality of functional devices (30) and each associated with different structural variants of the wall closure system (20), wherein the plurality of the functional devices (30) are each designed to configure themselves in each case independently in accordance with the selected configuration (40, 41).

## Revendications

1. Procédé (100) de configuration d'un système de fermeture murale (20) destiné à une fermeture murale (10), notamment une porte ou une fenêtre,
le système de fermeture murale (20) comprenant une pluralité de dispositifs fonctionnels (30) reliés entre eux par le biais d'un système de bus (22) et destinés à exécuter des fonctions de système automatisées du système de fermeture murale (20),
les dispositifs fonctionnels (30) étant conçus pour échanger des données fonctionnelles afin d'exécuter les fonctions de système par le biais du système de bus (22),
le procédé (100) comprenant les étapes suivantes :
- déterminer (105) une structure du système de fermeture murale (20) par le biais d'au moins un des dispositifs fonctionnels (30) sur la base de données d'initialisation des dispositifs fonctionnels (30) transmises par le biais du système de bus (22),
- sélectionner (110), par le biais de l'au moins un des dispositifs fonctionnels (30), une configuration (40, 41) du système de fermeture murale (20), laquelle est associée à la structure déterminée, parmi une pluralité de configurations (40, 41) du système de fermeture murale (20) qui sont mises en mémoire dans au moins un des dispositifs fonctionnels (30) et qui sont associées chacune à différentes variantes de structure du système de fermeture murale (20),
- configurer (120) les dispositifs fonctionnels (30) selon la configuration sélectionnée (40, 41),
**caractérisé en ce que**
les configurations associées aux différentes variantes de structure sont mises en mémoire dans plusieurs dispositifs fonctionnels (30),
la détermination (105) de la structure du système de fermeture murale (20) et la sélection (110) de la configuration (40, 41) du système de fermeture murale (20), laquelle est associée à la structure déterminée, sont chacune effectuées de manière autonome dans les plusieurs dispositifs fonctionnels (30), et
les dispositifs fonctionnels individuels (30) se configurent chacun de manière autonome selon la configuration sélectionnée (40, 41).

2. Procédé (100) selon la revendication 1,
les variantes de structure du système de fermeture murale (20) se différenciant par les dispositifs fonctionnels (30) raccordés au système de bus (22) et/ou par les fonctions de dispositif attribuées aux dispositifs fonctionnels (30).

3. Procédé (100) selon l'une des revendications précédentes,
les données d'initialisation étant transmises au moyen de messages de diffusion qui sont envoyés par les dispositifs fonctionnels individuels (30) et qui sont évalués par les autres dispositifs fonctionnels respectifs (30).

4. Procédé (100) selon l'une des revendications précédentes,
la configuration (120) comprenant la définition (122) de liaisons de données logiques sur la base desquelles des données fonctionnelles sont échangées entre les dispositifs fonctionnels (30) pendant le fonctionnement du système de fermeture murale (20).

5. Procédé (100) selon l'une des revendications précédentes,
la configuration (120) comprenant la définition (123) d'instructions de lecture destinées à des dispositifs fonctionnels (30) formant des unités d'entrée afin de commander la lecture de signaux d'entrée, et/ou la configuration (120) comprenant la définition (124) d'instructions de sortie destinées à des dispositifs fonctionnels (30) formant des unités de sortie afin de commander la délivrance de signaux de sortie.

6. Procédé (100) selon l'une des revendications précédentes,
la configuration (120) comprenant la définition (125) d'instructions logiques destinées à combiner logiquement les données fonctionnelles dans des dispositifs fonctionnels (30) formant des unités logiques.

7. Procédé (100) selon l'une des revendications précédentes, comprenant les étapes suivantes :
- lire (140) au moins un paramètre de configuration supplémentaire par le biais d'une interface utilisateur (24) du système de fermeture murale (20),
- adapter (145) la configuration sélectionnée (40, 41) sur la base du paramètre de configuration lu.

8. Procédé (100) selon l'une des revendications précédentes,
une première configuration (40, 41) et une deuxième configuration (40, 41) étant mises en mémoire dans l'au moins un dispositif fonctionnel (30),
une première variante de structure, associée à la première configuration (40, 41), comprenant un premier dispositif fonctionnel (30) et un deuxième dispositif fonctionnel (30),
une deuxième variante de structure, associée à la deuxième configuration (40, 41), comprenant le premier dispositif fonctionnel (30), le deuxième dispositif fonctionnel (30) et un troisième dispositif fonctionnel (30),
après la première configuration (40, 41), les données fonctionnelles fournies par le premier dispositif fonctionnel (30) étant combinées logiquement dans le deuxième dispositif fonctionnel (30) et
après la deuxième configuration (40, 41), les données fonctionnelles fournies par le premier dispositif fonctionnel (30) étant combinées logiquement dans le troisième dispositif fonctionnel (30).

9. Procédé (100) selon la revendication 8,
le premier dispositif fonctionnel (30) formant une unité d'entrée (56, 57, 60, 62, 63) destinée à un capteur (46) du système de fermeture murale (20) et le deuxième dispositif fonctionnel (30) formant une unité de sortie (50, 52, 58) destinée à un actionneur (45) du système de fermeture murale (20), notamment à un entraînement de la fermeture murale (10).

10. Procédé (100) selon l'une des revendications 8 à 9,
le troisième dispositif fonctionnel (30) formant une unité de commande centrale (54) du système de fermeture murale (20).

11. Procédé (100) selon l'une des revendications 8 à 10,
seule la deuxième variante de structure du système de fermeture murale (20) comprenant le troisième dispositif fonctionnel (30).

12. Procédé (100) selon l'une des revendications précédentes,
le système de bus (22) étant conçu comme système de bus série, en particulier comme un système de bus série selon le protocole de bus CAN.

13. Procédé (100) selon l'une des revendications précédentes,
les variantes de structure spécifiées du système de fermeture murale (20) comprenant une première variante de structure et une deuxième variante de structure,
le système de fermeture murale (20) formant, dans une première configuration (40, 41) associée à la première variante de structure, un système de fermeture murale (20) adapté aux personnes, en particulier un système anti-incendie ou un système d'issue de secours, et formant, dans une deuxième configuration (40, 41) associée à la deuxième variante de structure, un système de fermeture murale (20) adapté à la protection de bâtiment, en particulier un système de contrôle d'accès.

14. Procédé (100) selon la revendication 13,
dans la première configuration (40, 41), une première fonction de système du système de fermeture murale (20) ayant la priorité sur une deuxième fonction de système du système de fermeture murale (20),
dans la deuxième configuration (40, 41), la deuxième fonction de système du système de fermeture murale (20) ayant la priorité sur la première fonction de système du système de fermeture murale (20).

15. Procédé (100) selon la revendication 14,
la première fonction de système ayant pour effet de déplacer la fermeture murale (10) et la deuxième fonction de système ayant pour effet d'éviter une collision lorsque la fermeture murale (10) se déplace.

16. Procédé (100) selon l'une des revendications précédentes,
le procédé (100) comprenant, après la détermination (105) de la structure du système de fermeture murale (20), les étapes suivantes:
- émettre (130) un certain nombre de signaux qui correspond au nombre total de dispositifs fonctionnels (30) présents dans la structure déterminée du système de fermeture murale (20) par le biais d'au moins un des dispositifs fonctionnels (30).

17. Système de fermeture murale (20) destiné à une fermeture murale (10), notamment pour une porte ou une fenêtre,
le système de fermeture murale (20) comprenant plusieurs dispositifs fonctionnels (30) destinés à exécuter des fonctions de système automatisées du système de fermeture murale (20),
les dispositifs fonctionnels (30) étant reliés entre eux par le biais d'un système de bus (22) et étant conçus pour échanger des données fonctionnelles afin d'exécuter les fonctions de système par le biais du système de bus (22),
les dispositifs fonctionnels (30) étant conçus pour transmettre des données d'initialisation par le biais du système de bus (22),
plusieurs des dispositifs fonctionnels (30) étant conçus pour déterminer chacun de manière autonome une structure du système de fermeture murale (20) sur la base des données d'initialisation,
les plusieurs dispositifs fonctionnels (30) étant conçus pour sélectionner chacun de manière autonome une configuration (40, 41) du système de fermeture murale (20), laquelle est associée à la structure déterminée, parmi une pluralité de configurations (40, 41) du système de fermeture murale (20) qui sont mises en mémoire dans les plusieurs dispositifs fonctionnels (30) et qui sont associées chacune à différentes variantes de structure du système de fermeture murale (20),
les plusieurs dispositifs fonctionnels (30) étant conçus pour se configurer chacun de manière autonome selon la configuration sélectionnée (40, 41).
